# EUROPEAN PATENT SPECIFICATION

(11) **EP 1 234 993 B1**
(45) Date of publication and mention of the grant of the patent: **13.09.2006**
(21) Application number: 01200672.2
(22) Date of filing: 23.02.2001
(51) Int. Cl.: F16D 55/40, B60B 27/00

(54) **Wheel hub with integrated planetary gear and multiple disc brake**
Radnabe mit integriertem Planetengetriebe und Lamellenbremse
Moyeu de roue à engrenage planétaire intégré et frein multidisque

(43) Date of publication of application: 28.08.2002
(73) Proprietor: DANA ITALIA S.p.A, 38062 Arco (Trento) (IT)
(72) Inventor: Panizzolo, Fabrizio, 35157 Padova (IT)
(74) Representative: Zanardo, Giovanni

(56) References cited:
- EP-A- 0 189 892
- DE-C- 19 718 744
- FR-A- 2 350 520
- US-A- 4 424 874
- US-A- 6 131 705

## Description

The present invention refers to a braking device for axles of industrial machinery in general, particularly excavators.

It is known that the braking devices of industrial machinery in general are subjected to high levels of oscillations and/or vibrations, which can lead to rapid wear and tear of these. In particular, excavators or excavating machinery are intended for the excavation and/or the movement of earth or loose materials. Generally, an excavator is composed of a self-driven vehicle that tows an excavating tool provided with its own operating device; the excavating tool is normally composed of a bucket or one or more shovels.

The vehicle is supported at the front and rear by wheels which, in turn, are supported by a front and rear axle of the vehicle.

Particular reference shall subsequently be made to a rear axle of an excavator or similar which, according to normal executions, is tractive and not steering.

In a typical traditional execution, the axle comprises a load-bearing part which, in turn, comprises a hollow central body from which two arms, also hollow, extend. A wheel hub is joined to the end of each arm, and this supports a flange for fixing a wheel disc.

Contained inside the hollow body is a differential connected to a motor shaft and two axle shafts. The axle shafts, each of which is contained inside the load-bearing part of one of the arms, have one end connected to the fixing flange of the wheel disc by means of gears that form an epicyclic reduction gear.

Traditional braking devices with multiple discs in oil bath require the application of brake discs above the epicyclic reduction gear, with the consequent coupling play that this solution entails; in fact, this play is the cause of bothersome oscillations and vibrations during the active operating phase, namely excavation.

Therefore, it is noted that when the brakes in traditional braking devices are operated there is an undesirable oscillating or vibrating effect which it would be desirable to eliminate.

DE-A-19718744 discloses a planetary gearbox with an integrated brake for working machines according to the preamble of claim 1. This planetary gearbox is designed to have a particularly reduced size, but it is not provided with a proper lubrication system that allows to assure a high reliability of the braking device.

The aim of the present invention is, therefore, to eliminate the technical problems reported, executing a braking device for the axles of industrial machinery in general, particularly excavators, which can be operated without oscillations and/or vibrations occurring.

Another aim of the invention is to execute a braking device that is essentially inexpensive.

Yet another aim of the invention is to execute a braking device for the axles of industrial machinery in general, particularly excavators, that is essentially simple, safe and reliable.

These and other aims, according to this invention, are achieved by executing a braking device for the axles of industrial machinery in general, particularly excavators, as claimed in claim 1.

Other characteristics of the present invention are also defined in the subsequent claims.

Each axle hub relevant to the new invention supports a multiple disc braking device that is apt to brake and halt the vehicle.

Advantageously, the braking device according to the present invention can be lubricated in a particularly simple and efficacious manner without requiring the addition of any instruments external to the axle or complex structures to execute this function.

Further characteristics and advantages of a braking device for axles of industrial machinery in general, particularly excavators, according to the present invention, shall now be described in greater detail, provided merely as an unlimited example, with reference to the annexed schematic drawings, in which:

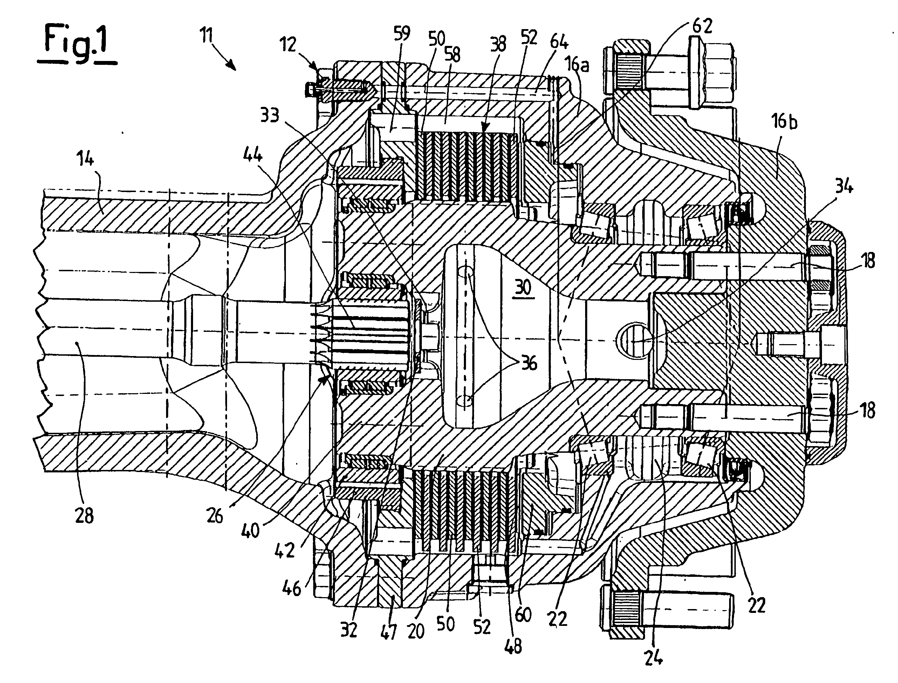

Figure 1 shows a section of a portion of a rear axle of a vehicle of an excavator or industrial machine in general according to the present invention;

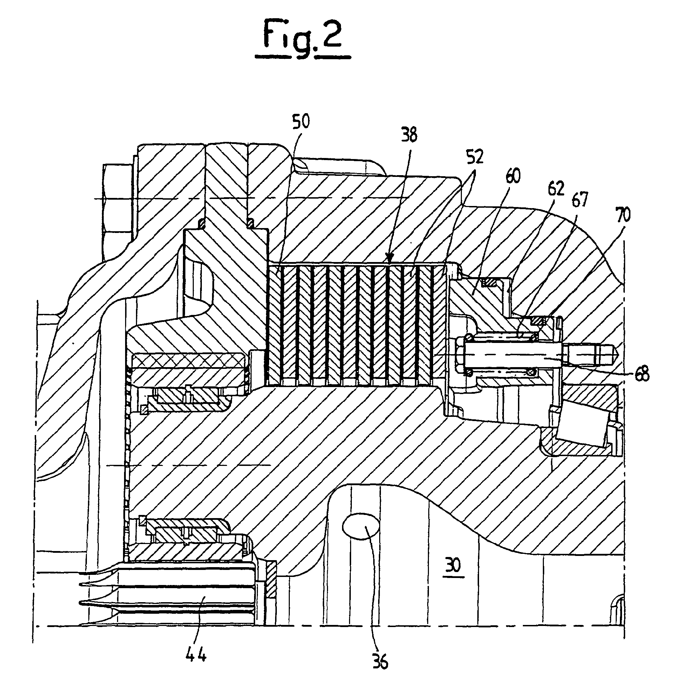

Figure 2 shows an enlarged section of a detail of a return component of a control piston of the braking device according to the present invention;

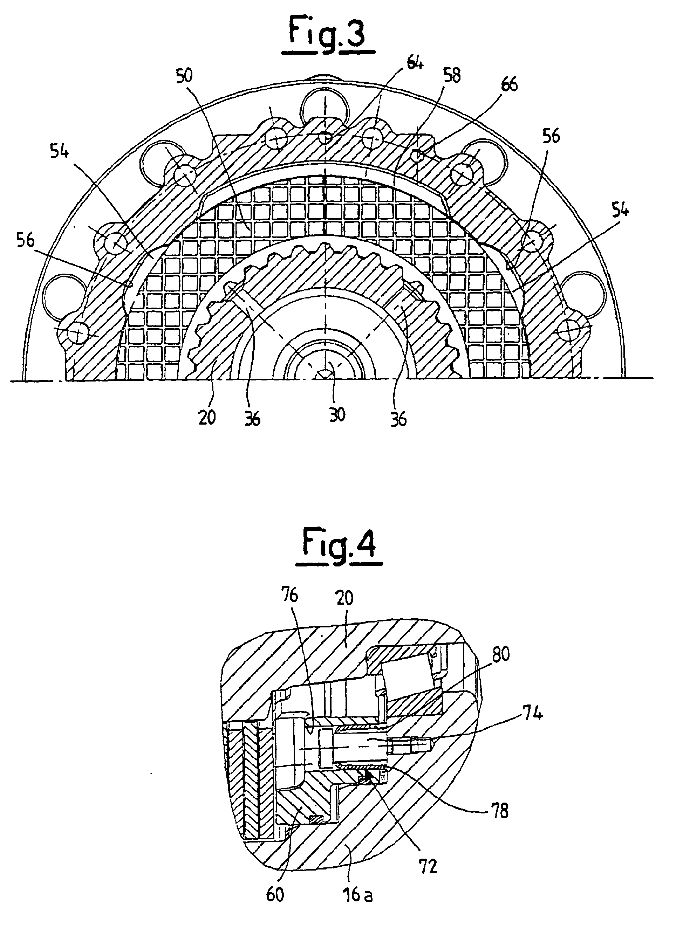

Figure 3 shows a cross section of the axle on which the braking device according to the invention is assembled;
Figure 4 shows an enlarged section of a automatic adjustment unit to take up any play; and

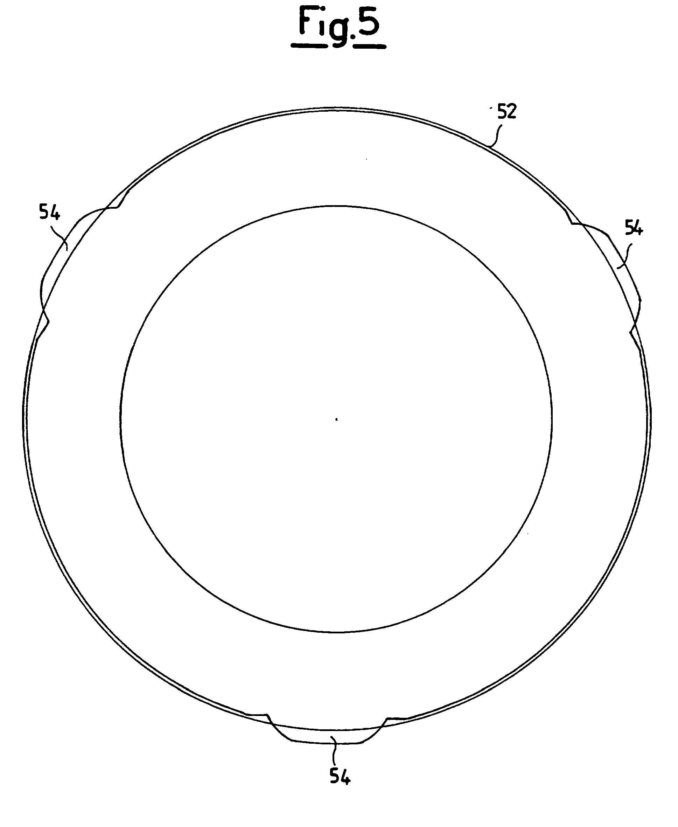

Figure 5 shows a plan view of a counter disc of the braking device according to the present invention.

With reference to the aforesaid Figures, a braking device for axles of industrial machinery in general, particularly excavators, is shown, in which the axle is indicated as a whole with the reference number 11 and is shown only in part.

The axle 11 is executed through a load-bearing part 12 which, in typical executions, comprises a central casing (not shown) extending from which are two symmetrical arms 14, only one is described of which with all its relevant parts. Connected to the end of each arm 14 is a wheel hub 16a, fixed in relation to the arm 14, projecting from which is a fixing flange of the wheel disc 16b, apt to rotate in relation to the wheel hub 16a.

In fact, the flange 16b is joined by means of screws 18 to a hub 20 that is contained inside the wheel hub 16a.

The hub 20 has an elongated shape and is supported at one end by a pair of bearings 22, in the middle of which an annular chamber 24 is identified, and at a second end it is joined to a planetary gear support of an epicyclic reduction gear 26 coupled to an axle shaft 28.

The hub 20 has a cavity, which runs along its own longitudinal axis, which identifies an elongated chamber 30. The chamber 30 is demarcated at the ends at one end by a cylindrical extension of the flange 16b that fits inside it, and at the other end by a ring 32 resting against which is a portion of the hub 20 provided with radial slits 33. Therefore, the ring 32 is placed between the hub 20 and the axle shaft 28. Moreover, one end of the axle shaft 28 rests axially on this ring 32.

The hub 20 is provided with radial through holes 34 that connect the chamber 30 with the chamber 24 and, moreover, further radial through holes 36 that begin at the chamber 30 and open out along the rim of the hub 20 in relation to a pack of discs of the braking device 38.

The epicyclic reduction gear 26 comprises three or four pins 40, joined to a front portion of the hub 20 and equidistant from one another.

Each pin 40 is fitted idly, with a bearing placed in between, with a gear wheel 42 that forms a planetary gear.

The gear wheels 42 mesh with a gear wheel 44 of each axle shaft 28 and, simultaneously, with a crown wheel 46. The crown wheel 46 is joined to a plate 47 by means of grooved couplings while the plate 47, in turn, is fixed between the wheel hub 16a and the arms 14.

In a different execution, in which there are three pins 40, the epicyclic reduction gear 26 essentially maintains the same structure with obvious modifications due to the different number of planetary gears.

Identified between the hub 20, the plate 47 and the wheel hub 16a is a chamber 48 which houses the braking device 38 according to the invention.

The braking device 38 comprises a series of annular discs 50 fitted into a grooved portion of the hub 20, in such a way as to translate in a longitudinal direction, although idle rotation on this hub 20 is prevented. Fitted between the discs 50 are counter discs 52, coupled to the wheel hub 16a, which in turn can translate longitudinally in relation to the wheel hub 16a but cannot rotate.

The counter discs 52 are in fact provided with three protuberances 54, executed on their rim and equidistant from one another, which fit into relevant notches 56 of the wheel hub 16a. Moreover, the wheel hub 16a has longitudinal grooves 58 for cooling oil recirculation and, in relation to these, the plate 47 is provided with through holes 59 aligned with the grooves 58 and with the notches 56.

The plate 47 forms a shoulder for the pack of discs 50 and counter discs 52 and resting against this is one of the discs 50 coupled to the hub 20. Instead, at the other end the pack of discs 50 and counter discs 52 is demarcated by one of the counter discs 52, which is coupled to the wheel hub 16a and facing an annular piston 60, as the control component. The piston 60 is apt to press the discs 50 and counter discs 52 together, so that these exercise the braking action.

The piston 60 has a right-angled portion, in relation to a right-angled portion of the wheel hub 16a, that identifies a further chamber 62, into which fluid, such as oil, can be poured through a feed pipe 66. A second bleed pipe 64 allows air to escape from the braking device 38 circuit according to the invention. The seal in the chamber 62 is guaranteed by grommets placed between the piston 60 and the wheel hub 16a.

The piston 60 has a through hole 67, adjacent to the chamber 62 but which does not communicate with this, fitted into which is a screw 68 that is locked on the wheel hub 16a. Inside this hole 67 a spring 70 is fitted as return component, locked between a head of the screw 68 and a shoulder of this hole, so that the piston 60 is pressed against the wheel hub 16a, spacing it from the pack of discs 50 and counter discs 52.

The braking device 38 according to the invention, is also provided with an automatic adjustment unit 72 to take up any play.

Each unit 72 comprises a screw 74 locked against the wheel hub 16a and fitted idle into a through hole 76 of the piston 60. Fitted between the piston 60 and a head of the screw 74 is an elastic component 78 composed of a slightly conical sleeve and provided with at least one groove 80.

The sleeve 78 is fitted with pressure into the hole 76, in such a way as to impede by means of its resistance to friction movement of the piston 60 towards the wheel hub 16a.

Operation of a braking device for axles of industrial machinery in general, in particular excavators, according to the present invention, is essentially as follows.

When a vehicle on which the axle 11 is assembled is moving and the braking device 38 is not operated, the axle shaft 28 transmits movement to the hub 20. The hub 20, in turn, operates in rotation the fixing flange 16b of the wheel disc.

Lubrication of the epicyclic reduction gear 26 is guaranteed by the oil contained inside the arms 14. Moreover, this oil passes through the slits 33 in the vicinity of the ring 32 and into the chamber 30. From the chamber 30, due to the high centrifugal stress to which it is subjected, the oil passes through the holes 34 and into the chamber 24 where it lubricates the bearings 22.

From the chamber 24 the oil passes through the bearing 22 facing the inside of the wheel hub 16a to lubricate the facing surfaces of the piston 60 and the counter disc 52 adjacent to it. Then, through the groove 58, the notches 56 and the through holes 59, the oil returns inside the arms 14.

Moreover, from the chamber 30 the oil passes into the through holes 36 and lubricates the facing surfaces of the discs 50 and counter discs 52, so that there is minimum friction when the device 38 is not operating. This oil also returns inside the arms 14 through the grooves 58, notches 56 and through holes 59.

The braking device 38 can be operated by feeding oil inside the chamber 62 by means of a pump, which for simplicity is not illustrated.

When the braking device 38 is activated, pressurised oil is fed to the chamber 62 through the feed pipe 66. This oil overcomes the elastic reaction of one or more springs 70 to permit the piston 60 to translate until it strikes the counter disc 52 facing it. The pack of the discs 50 and counter discs 52 is compressed and the hub 20 is slowed down and, eventually, halted. In this way a braking action is exercised on the hub 20.

When the braking device 38 is released, the oil is discharged from the chamber 62 and the springs 70 move the piston 60 away from the pack of discs 50 and counter discs 52. In this way the braking action on the hub 20 is no longer exercised.

It has been seen how the braking device for axles of industrial machinery in general, in particular excavators, according to the invention is particularly advantageous as, in addition to being capable of exercising a very intense braking action, it is able to eliminate problems of torsional oscillations, as mechanical play is totally eliminated between the brake support and rotating parts of the wheel hub. Moreover, lubrication of the braking device according to the invention is extremely simple and particularly efficacious, favouring the reduction of unwanted friction when the braking device is not operating.

The braking device for axles of industrial machinery in general, in particular excavators, thus conceived is susceptible to numerous modifications and variants, all coming under the invention; moreover, all the parts can be replaced with technically equivalent components. In practice, any materials and dimensions may be utilised, according to technical requirements.

## Claims

1. Braking device (38) for axles (11) of industrial machinery in general, in particular excavators, the said axle (11) comprising a load-bearing part (12) with a pair of arms (14) each of which terminates with a wheel hub (16a), fixed in relation to the said arms (14) projecting from which is a fixing flange of the wheel disc (16b) able to rotate in relation to the said wheel hub (16a), the said flange (16b) being joined to a hub (20) that is supported by the said wheel hub (16a) and can be operated in rotation by an axle shaft (28), **characterised in that** said braking device (38) is housed on the rim of the said hub (20), said hub (20) having an elongated shape and being supported at one end by bearings (22) and at a second end incorporating a planetary gear support of an epicyclic reduction gear (26) connected to the said axle shaft (28), said bearings (22) being two in number, and identified between the said bearings (22) being a first annular chamber (24), said hub (20) being provided with a cavity, that runs along its longitudinal axis, which identifies a second elongated chamber (30), and said hub (20) being further provided with first radial through holes (34) that connect with a second chamber (30), identified by a cavity of the said hub (20), with the said first chamber (24).

2. Braking device (38) as claimed in claim 1, **characterised in that** the said second chamber (30) is demarcated at the ends at one end by a cylindrical extension of the said flange (16b) that fits inside it, and at the other end by a ring (32) against which the end of the said axle shaft (28) rests.

3. Braking device (38) as claimed in claim 1, **characterised in that** on the said hub (20) is provided with second radial through holes (36) that begin at the said second chamber (30) and open out along the rim of the said hub (20) in relation to the said braking device (38).

4. Braking device (38) as claimed in claim 1, **characterised in that** said braking device (38) is housed in a third chamber (48) identified between the said hub (20), the said wheel hub (16a) and a plate (47), fixed to the said wheel hub (16a) and connected to a crown wheel (46) of the said epicyclic reduction gear (26) by means of grooved couplings.

5. Braking device (38) as claimed in claim 4, **characterised in that** it comprises a series of annular discs (50) fitted into a grooved portion of the said hub (20), in such a way as to translate in a longitudinal direction, although idle rotation on the said hub (20) is prevented, with fitted between the said discs (50) counter discs (52), coupled to the said wheel hub (16a), which can translate longitudinally in relation to the wheel hub (16a) but cannot rotate in relation to this. The said discs (50) and said counter discs (52) can be pressed together by the action of a control component (60), so that these exercise the braking action.

6. Braking device (38) as claimed in claim 5, **characterised in that** the said counter discs (52) are provided with protuberances (54) executed on their rim, which fit into relevant notches (56) in the said wheel hub (16a).

7. Braking device (38) as claimed in claim 6, **characterised in that** the said wheel hub (16a) has longitudinal grooves (58) for cooling oil recirculation aligned with through holes (59) of the said plate (47).

8. Braking device (38) as claimed in claim 7, **characterised in that** the said plate (47) forms a shoulder for a pack of the said discs (50) and counter discs (52) and resting against which is one of the discs (50) coupled to the said hub (20).

9. Braking device (38) as claimed in claim 8, **characterised in that** a pack of the said discs (50) and counter discs (52) is demarcated on one side by one of the counter discs (52), which is coupled to the said wheel hub (16a) and facing the said control component (60).

10. Braking device (38) as claimed in claim 9, **characterised in that** the said control component (60) is composed of a piston, the said piston (60) has a right-angled portion, in relation to a right-angled portion of the said wheel hub (16a), that identifies a fourth chamber (62), into which fluid can be poured through a feed pipe (66).

11. Braking device (38) as claimed in claim 10, **characterised in that** the said piston (60) is provided with at least one return component (68, 70) apt to space it from the said pack of discs (50) and counter discs (52).

12. Braking device (38) as claimed in claim 11, **characterised in that** the said return component (68, 70) comprises a through hole (67) executed on the said piston (60), fitted into which is a screw (68) that is locked to the wheel hub (16a). Fitted inside the said through hole (67) is a spring (70), locked between a head of the said screw (68) and a shoulder of this through hole (67), so that the said piston (60) is pressed against the said wheel hub (16a), spacing it from the pack of the said discs (50) and counter discs (52).

13. Braking device (38) as claimed in claim 1, **characterised in that** it comprises an automatic adjustment unit (72) to take up any play.

14. Braking device (38) as claimed in claim 10, **characterised in that** an automatic adjustment unit (72) comprises at least one screw (74) locked against the said wheel hub (16a) and fitted idle into a through hole (76) of the said piston (60). Fitted between the said piston (60) and a head of the said screw (74) is at least one slightly conical sleeve (78) provided with at least one groove (80), fitted with pressure into the said hole (76) in such a way as to impede by means of its resistance to friction movement of the said piston (60) towards the said wheel hub (16a).

15. Braking device (38) as claimed in claim 1, **characterised in that** it is housed below the said epicyclic reduction gear (26), namely placed directly between the said axle hub (16a) and the said hub (20).

16. Braking device (38) as claimed in claim 2, **characterised in that** the said ring (32) is placed between the said hub (20) and the said axle shaft (28).

## Patentansprüche

1. Bremsgerät (38) für Achsen (11) von industriellen Maschinen im allgemeinen, insbesondere von Baggern, wobei die Achse (11) einen Last tragenden Teil (12) mit einem Paar von Armen (14) enthält, von denen jeder an einer Radnabe (16a) endet, die bezüglich der Arme fixiert ist und von der aus ein Befestigungsflansch der Radscheibe (16b) hervorragt, die bezüglich der Radnabe (16a) rotieren kann, wobei der Flansch (16b) mit einer Nabe (20) verbunden ist, die von der Radnabe (16a) gestützt ist und durch einen Achsschaft (28) in Rotation betrieben werden kann, **gekennzeichnet dadurch, daß** das Bremsgerät (38) auf dem Rand der Nabe (20) angeordnet ist, wobei die Nabe (20) eine längliche Form hat und an einem Ende von Lagern (22) gestützt wird und an einem zweiten Ende eine Planetengetriebehalterung eines mit dem Achsschaft (28) verbundenen Umlaufuntersetzungsgetriebes (26) beinhaltet, wobei die Anzahl der Lager (22) zwei ist und zwischen den Lagern (22) eine erste ringförmige Kammer (24) ausgeprägt ist, wobei die Nabe (20) mit einem Hohlraum versehen ist, der entlang ihrer Längsachse verläuft, wodurch eine zweite längliche Kam*mer (30) ausgeprägt wird und wobei die Nabe (20) ferner mit ersten radialen Durchgangslöchern (34) versehen ist, die mit einer zweiten Kammer (30) in Verbindung stehen, die durch einen Hohlraum der Nabe (20) ausgeprägt ist, sowie mit der ersten Kammer (24).

2. Bremsgerät (38) nach Anspruch 1, **gekennzeichnet dadurch, daß** die zweite Kammer (30) an den Enden des einen Endes durch eine zylindrische Verlängerung des Flansches (16b), der in sie hinein paßt, und an dem anderen Ende durch einen Ring (32), gegen den das Ende des Achsschafts (28) ruht, begrenzt ist.

3. Bremsgerät (38) nach Anspruch 1, **gekennzeichnet dadurch, daß** die Nabe (20) mit zweiten radialen Durchgangslöchern (36) versehen ist, die an der zweiten Kammer (30) beginnen und sich entlang des Randes der Nabe (20) bezüglich des Bremsgeräts (38) öffnen.

4. Bremsgerät (38) nach Anspruch 1, **gekennzeichnet dadurch, daß** das Bremsgerät (38) in einer dritten Kammer (48) angeordnet ist, die zwischen der Nabe (20), der Radnabe (16a) und einer Platte (47) ausgeprägt ist, an der Radnabe (16a) fixiert ist und mit einem Kegelrad (46) des Umlaufuntersetzungsgetriebes (26) mittels Rillenverbindungen verbunden ist.

5. Bremsgerät (38) nach Anspruch 4, **gekennzeichnet dadurch, daß** es eine Reihe von ringförmigen Scheiben (50) umfaßt, die in einen Rillenabschnitt der Nabe (20) in solch einer Weise eingepaßt sind, daß sie in einer Längsrichtung übersetzen, obwohl die Leerrotation auf der Nabe (20) verhindert wird, wobei zwischen den Scheiben (50) Gegenscheiben (52) eingepaßt sind, die mit der Radnabe (16a) verbunden sind, welche in Längsrichtung in Bezug auf die Radnabe (16a) übersetzen kann aber nicht in Bezug auf diese rotieren kann, die Scheiben (50) und die Gegenscheiben (52) mittels der Einwirkung einer Steuerungskomponente (60) zusammengedrückt werden können, so daß diese den Bremsvorgang ausüben.

6. Bremsgerät (38) nach Anspruch 5, **gekennzeichnet dadurch, daß** die Gegenscheiben (52) mit Vorsprüngen (54) versehen sind, die auf ihrem Rand ausgeprägt sind, welche in entsprechende Kerben (56) in der Radnabe (16a) passen.

7. Bremsgerät (38) nach Anspruch 6, **gekennzeichnet dadurch, daß** die Radnabe (16a) an den Durchgangslöchern (59) der Platte (47) ausgerichtete Längsrillen (58) zum Kühlen des Ölkreislaufs aufweist.

8. Bremsgerät (38) nach Anspruch 7, **gekennzeichnet dadurch, daß** die Platte (47) eine Schulter für eine Gruppe dieser Scheiben (50) und Gegenscheiben (52) bildet und daß eine der Scheiben (50), die mit der Nabe (20) verbunden ist, gegen diese ruht.

9. Bremsgerät (38) nach Anspruch 8, **gekennzeichnet dadurch, daß** eine Gruppe der Scheiben (50) und Gegenscheiben (52) auf einer Seite von einer der Gegenscheiben (52) begrenzt ist, die mit der Radnabe (16a) verbunden ist und der Steuerungskomponente (60) gegenüberliegt.

10. Bremsgerät (38) nach Anspruch 9, **gekennzeichnet dadurch, daß** die Steuerungskomponente (60) aus einem Kolben zusammengesetzt ist, wobei der Kolben (60), in Bezug auf einen rechtwinkligen Abschnitt der Radnabe (16a), einen rechtwinkligen Abschnitt aufweist, der eine vierte Kammer (62) ausprägt, in die Fluid durch ein Zuführungsrohr (66) einfließen kann.

11. Bremsgerät. (38) nach Anspruch 10, **gekennzeichnet dadurch, daß** der Kolben (60) mit zumindest einer Rückkomponente (68, 70) versehen ist, die dazu ausgelegt ist, ihn in einen Abstand von der Gruppe der Scheiben (50) und Gegenscheiben (52) zu versetzen.

12. Bremsgerät (38) nach Anspruch 11, **gekennzeichnet dadurch, daß** die Rückkomponente (68, 70) ein auf dem Kolben (60) angesetzten Durchgangsloch (67) aufweist, in das eine Schraube (68) eingepaßt ist, die mit der Radnabe (16a) verriegelt ist, in das Durchgangsloch (67) eine Feder (70) eingepaßt ist, die zwischen einem Kopf der Schraube (68) und einer Schulter dieses Durchgangslochs (67) verriegelt ist, so daß der Kolben (60) gegen die Radnabe (16a) gedrückt wird und sie in einen Abstand von der Gruppe der Scheiben (50) und Gegenscheiben (52) versetzt.

13. Bremsgerät (38) nach Anspruch 1, **gekennzeichnet dadurch, daß** es eine automatische Anpassungseinheit (72) zum Ausgleichen jeglichen Spiels umfaßt.

14. Bremsgerät (38) nach Anspruch 10, **gekennzeichnet dadurch, daß** eine automatische Anpassungseinheit (72) zumindest eine gegen die Radnabe (16a) und frei in das Durchgangsloch (76) des Kolbens (60) eingepaßte Schraube (74) umfaßt, zwischen dem Kolben (60) und einem Kopf der Schraube (74) zumindest eine leicht kegelförmige Hülse (78) eingepaßt ist, die mit mindestens einer Rille (80) versehen ist und unter Druck in das Loch (76) so eingepaßt ist, daß sie mit ihrem Widerstand die Reibungsbewegung des Kolbens (60) zur Radnabe (16a) hin hemmt.

15. Bremsgerät (38) nach Anspruch 1, **gekennzeichnet dadurch, daß** es unterhalb des Umlaufuntersetzungsgetriebes (26) angeordnet ist und zwar direkt zwischen der Achsnabe (16a) und der Nabe (20) plaziert ist.

16. Bremsgerät (38) nach Anspruch 2, **gekennzeichnet dadurch, daß** der Ring (32) zwischen der Nabe (20) und dem Achsschaft (28) plaziert ist.

## Revendications

1. Système de freinage (38) pour les essieux (11) des machines industrielles en général, et en particulier des excavateurs, ledit essieu (11) comprenant une .partie porteuse (12) avec une paire de bras (14) chacun d'entre eux se terminant par un moyeu de roue (16a), fixé par rapport aux dits bras (14) desquels est saillant un flasque de fixation du disque de roue (16b) pouvant pivoter par rapport au dit moyeu de roue (16a), ledit flasque (16b) étant relié à un moyeu (20) qui est supporté par ledit moyeu de roue (16a) et pouvant être entrainé en rotation par un arbre de roue (28), **caractérisé en ce que** ledit système de freinage (38) est logé sur la jante dudit moyeu (20), ledit moyeu (20) ayant une forme allongée et étant soutenu à une extrémité par des paliers (22) et à la seconde extrémité incorporant un support d'engrenage planétaire d'un réducteur épicycloïdal (26) assemblé au dit arbre de roue (28), lesdits paliers (22) étant au nombre de deux, et étant identifiée entre lesdits paliers (22) une première chambre annulaire (24) , ledit moyeu (20) étant pourvu d' une cavité, qui s'étend le long de son axe longitudinal, qui définit une deuxième chambre allongée (30), et ledit moyeu (20) étant de plus pourvu de premiers trous traversants radiaux (34), qui communiquent avec une deuxième chambre (30), définie par une cavité dudit moyeu (20), avec ladite première chambre (24).

2. Système de freinage (38) selon la revendication 1, **caractérisé en ce que** ladite deuxième chambre (30) est démarquée à ses extrémités à une extrémité par une rallonge cylindrique dudit flasque (1 6b) qui est ajustée à l'intérieur, et à l'autre extrémité par un anneau (32) contre lequel l'extrémité dudit arbre de roue (28) est posée.

3. Système de freinage (38) selon la revendication 1, **caractérisé en ce que** ledit moyeu (20) est équipé de seconds trous traversants radiaux (36) qui débutent à ladite seconde chambre (30) et débouchent le long de la jante dudit moyeu (20) par rapport au dit système de freinage (38).

4. Système de freinage (38) selon la revendication 1, **caractérisé en ce que** ledit système de freinage (38) est logé dans une troisième chambre (48) définie entre ledit moyeu (20), ledit moyeu de roue (16a) et une plaquette (47), fixée audit moyeu de roue (16a) et raccordée à une roue dentée (46) dudit réducteur épicycloïdal (26) au moyen d'accouplements rainurés.

5. Système de freinage (38) selon la revendication 4, **caractérisé en ce qu'**il comprend une série de disques annulaires (50) ajustés dans une partie rainurée dudit moyeu (20), de façon à pouvoir se translater selon une direction longitudinale, bien que la rotation au ralenti dudit moyeu (20) soit empêchée, avec, entre lesdits disques (50), des contre-disques (52) calés, accouplés au dit moyeu de roue (16a), qui peuvent se translater longitudinalement par rapport au moyeu à roue (16a) mais ne peuvent pas pivoter par rapport à celui-ci, lesdits disques (50) et lesdits contre-disques (52) peuvent être pressés l'un contre l'autre par l'action d'un composant de commande (60), afin que ceux ci exercent l'action de freinage.

6. Système de freinage (38) selon la revendication 5, **caractérisé en ce que** lesdits contre-disques (52) sont équipés de protubérances (54) ménagées sur leur jante, qui s'ajustent dans des encoches correspondantes (56) dans ledit moyeu de roue (16a).

7. Système de freinage (38) selon la revendication 6, **caractérisé en ce que** ledit moyeu de roue (16a) possède des rainures longitudinales (58) pour le recyclage de l'huile de refroidissement, alignées avec des trous traversants (59) de ladite plaquette (47).

8. Système de freinage (38) selon la revendication 7, **caractérisé en ce que** ladite plaquette (47) forme un épaulement pour un jeu desdits disques (50) et contre-disques (52) et contre lequel s'appuie l'un des disques (50) accouplé audit moyeu (20).

9. Système de freinage (38) selon la revendication 8, **caractérisé en ce qu'**un jeu desdits disques (50) et contre-disques (52) est démarqué sur un côté par un des contre-disques (52), qui est accouplé audit moyeu de roue (16a) et fait face audit composant de commande (60).

10. Système de freinage (38) selon la revendication 9, **caractérisé en ce que** ledit composant de commande (60) est composé d'un piston, ledit piston (60) ayant une partie à angle droit, par rapport à une partie à angle droit dudit moyeu de roue (16a), qui définit une quatrième chambre (62), dans laquelle le liquide peut être versé par un tuyau d'alimentation (66).

11. Système de freinage (38) selon la revendication 10, **caractérisé en ce que** ledit piston (60) est équipé d'au moins un composant de retour (68, 70) pouvant l'espacer dudit jeu de disques (50) et contre-disques (52).

12. Système de freinage (38) selon la revendication 11, **caractérisé en ce que** ledit composant de retour (68, 70) comprend un trou traversant (67) ménagé sur ledit piston (60), dans lequel s'adapte une vis (68) qui est calée sur le moyeu de roue (16a), a l'intérieur dudit trou traversant (67) se trouve un ressort (70), calé entre la tête de ladite vis (68) et un épaulement de ce trou traversant (67), afin que ledit piston (60) soit sollicité contre ledit moyeu de roue (16a), l'espaçant du jeu desdits disques (50) et contre-disques (52).

13. Système de freinage (38) selon la revendication 1, **caractérisé en ce qu'**il comprend une unité de réglage automatique (72) pour reprendre tout jeu.

14. Système de freinage (38) selon la revendication 10, **caractérisé en ce que** l'unité de réglage automatique (72) comprend au moins une vis (74) calée sur ledit moyeu de roue (16a) et insérée lâchement dans un trou traversant (76) dudit piston (60), calé entre ledit piston (60) et la tête de ladite vis (74) se trouve au moins un manchon légèrement conique (78) équipé d'au moins une rainure (80), inséré par pression dans ledit trou (76) de façon à empêcher de par sa résistance à la friction le mouvement dudit piston (60) vers ledit moyeu de roue (16a).

15. Système de freinage (38) selon la revendication 1, **caractérisé en ce qu'**il est logé sous ledit réducteur épicycloïdal (26), nommément placé directement entre ledit moyeu d'essieu (16a) et ledit moyeu (20).

16. Système de freinage (38) selon la revendication 2, **caractérisé en ce que** ledit anneau (32) est placé entre ledit moyeu (20) et ledit arbre de roue (28).
